(19) Europäisches Patentamt / European Patent Office / Office européen des brevets

(11) **EP 3 455 452 B1**

(12) **FASCICULE DE BREVET EUROPEEN**

(45) Date de publication et mention
de la délivrance du brevet:
**29.01.2020 Bulletin 2020/05**

(21) Numéro de dépôt: **17754420.2**

(22) Date de dépôt: **27.07.2017**

(51) Int Cl.:
*G06Q 10/04* (2012.01)          *G06Q 50/06* (2012.01)
*E21B 43/00* (2006.01)          *E03B 3/06* (2006.01)
*G06F 3/05* (2006.01)          *E03B 1/00* (2006.01)

(86) Numéro de dépôt international:
**PCT/FR2017/052124**

(87) Numéro de publication internationale:
**WO 2018/020181 (01.02.2018 Gazette 2018/05)**

(54) **PROCÉDÉ DE DÉTERMINATION TEMPORELLE D'UN VOLUME D'EAU PRÉLEVABLE MAXIMUM ADMISSIBLE D'UNE SOURCE D'EAU SOUTERRAINE**

VERFAHREN ZUR BESTIMMUNG EINER HÖCHSTZULÄSSIGEN WASSERMENGE, DIE IM LAUFE DER ZEIT AUS EINER UNTERIRDISCHEN WASSERQUELLE ENTFERNT WERDEN KANN

METHOD FOR DETERMINING A MAXIMUM ALLOWABLE VOLUME OF WATER THAT CAN BE REMOVED OVER TIME FROM AN UNDERGROUND WATER SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2016 FR 1657370**
**20.12.2016 FR 1662916**

(43) Date de publication de la demande:
**20.03.2019 Bulletin 2019/12**

(73) Titulaire: **Veolia environnement-VE**
**75008 Paris (FR)**

(72) Inventeurs:
• **KECH, Sébastien**
**78230 Le Pecq (FR)**
• **MARTIN, Vincent**
**75002 Paris (FR)**
• **DECHESNE, Magali**
**34980 Saint Clément de Rivière (FR)**
• **MANDEL, Pierre**
**75012 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A1- 2010 193 183**

## Description

L'invention se rapporte à un procédé de détermination temporelle d'un volume d'eau prélevable maximum admissible d'une source d'eau souterraine, ledit volume d'eau étant prélevé en un point de prélèvement et l'état hydrogéologique de la source d'eau souterraine étant qualifié par des mesures de cotes piézométriques sur un piézomètre de référence.

## Domaine technique

De nos jours, les arrêtés de limitation des usages de l'eau traduisent des tensions récurrentes sur les ressources en eau souterraines, et notamment sur les nappes, en période d'étiage. Ces tensions sont exacerbées par la saisonnalité des besoins en eau liés à l'irrigation agricole ou à l'afflux touristique pour l'alimentation en eau potable. Pour un système de production d'eau, ces tensions peuvent engendrer des coûts d'exploitation supplémentaires liés à des achats d'eau, des coûts de pompage ou des coûts de traitement. Le contexte du changement climatique pourrait amplifier ces tensions à moyen terme.

Le volume d'eau prélevable d'une ressource en eau souterraine est souvent difficile à estimer en raison de la complexité des hydrosystèmes, la ressource d'eau souterraine pouvant par exemple être une nappe contenue dans un aquifère.

## État de la technique

De nombreux procédés de détermination d'un volume prélevable existent à l'échelle d'une ressource en eau souterraine. Par exemple, le document US2010/193183 décrit une procédé de gestion de l'exploitation d'un aquifère. Mais la difficulté consiste à évaluer le volume d'eau réellement disponible sur un ouvrage de prélèvement de la source en eau souterraine, c'est-à-dire au niveau d'un système de production d'eau constitué d'un captage d'eau souterraine (point de prélèvement) ou d'un ensemble de captages (points de prélèvements) formant un champ captant. L'estimation de ce volume prélevable dépend des caractéristiques du captage lui-même et des caractéristiques hydrodynamiques locales de la source d'eau souterraine.

L'estimation d'un volume prélevable à l'échelle d'un système de production d'eau mobilisant un ou plusieurs captages d'eau souterraine dépend à la fois du volume d'eau prélevable dans la ressource en eau souterraine et de la configuration des captages eux-mêmes. En théorie, seul un modèle spatialisé 2D ou 3D permettrait d'effectuer ce genre de simulations et de simuler une série de données piézométriques prospectives en un point donné de la source d'eau souterraine. Ce type d'outil est complexe à mettre en œuvre, mais il existe également des procédés simplifiés graphiques, statistiques et/ou analytiques permettant d'estimer un volume prélevable pour un forage donné.

Des procédés actuellement utilisés distinguent plusieurs termes pour définir les limites d'une ressource ou d'un système de production : limite hydrogéologique, limite potentielle, limite de la ressource/système, et « Deployable Output ».

Il est à noter que le « Deployable Output » correspond au volume d'eau brute pouvant être mis en distribution après traitement, à partir d'une ou plusieurs ressources, tenant compte, pour une demande en eau déterminée:

- des limites hydrogéologiques,
- des contraintes physiques et opérationnelles (dues aux capacités physiques des infrastructures de pompage, transport et traitement, aux contraintes hydrauliques en termes de hauteur d'eau à respecter ou de pression minimum/maximum),
- des contraintes de qualité d'eau (périodes associées à une dégradation de la qualité d'eau, ou niveau cible à ne pas dénoyer pour des aquifères, etc.),
- des contraintes réglementaires (autorisations de prélèvement).

Il est à noter également que chacun de ces paramètres peut constituer un facteur limitant pour le « *Deployable Output »*. Une fois que le *« Deployable Output »* a été déterminé, les pertes en eau et exports sont soustraits et les imports ajoutés, afin d'obtenir les volumes disponibles en distribution. Toutefois, cette approche n'est pas satisfaisante car elle ne fournit qu'une valeur unique et très conservative du volume maximum prélevable.

D'autres procédés se basent sur une estimation de la limite exploitable à long-terme d'un forage. Par exemple, pour un aquifère captif, des procédés analytiques permettent de calculer une limite d'exploitation sécuritaire théorique. Cette limite représente généralement le débit pouvant être maintenu pendant une longue durée, sans franchir le rabattement disponible. Il est à noter que le rabattement disponible correspond à la différence entre le niveau d'eau en l'absence de pompage et la cote du toit de l'aquifère captif. Cette limite est alors considérée comme un indicateur plutôt que comme une valeur limite fiable.

Toutefois, les procédés actuellement utilisés et dédiés à l'estimation du volume maximum prélevable sur les points de prélèvement d'eau souterraine sur une longue durée fournissent des estimations très sécuritaires, car les captages ne sont généralement pas exploités en continu et les aquifères se rechargent en parallèle. L'application de ces procédés sur des durées aussi longues, par exemple vingt ans, est peu réaliste, car les conditions d'applicabilité sur de telles durées ne sont plus satisfaites. De plus, ces procédés font l'hypothèse d'un prélèvement à débit constant tout au long de cette longue durée, ce qui est également peu réaliste. En d'autres termes, les procédés actuellement utilisés ne répondent pas aux objectifs recherchés, car ils fournissent une valeur unique de volume maximum prélevable, non actualisée en fonction de la situation hydrogéologique.

Il existe donc un réel besoin de fournir un procédé palliant ces défauts, inconvénients et obstacles de l'art antérieur. En particulier, il existe un besoin de fournir un procédé permettant de répondre à l'ensemble des attentes, notamment :

- l'évaluation d'un volume d'eau souterraine prélevable réaliste et pas simplement sécuritaire ;
- l'évaluation d'un volume d'eau souterraine prélevable variable dans le temps selon les différentes contraintes ;
- une utilisation simple, applicable à un grand nombre de captages.

**Description de l'invention**

Pour résoudre un ou plusieurs des inconvénients cités précédemment, l'invention a pour objet un procédé de détermination temporelle d'un volume d'eau prélevable maximum admissible d'une source d'eau souterraine, ledit volume d'eau étant prélevé en un point de prélèvement et l'état hydrogéologique de la source d'eau souterraine étant qualifié par des mesures de cotes piézométriques sur un piézomètre de référence,
ledit procédé étant caractérisé en ce qu'il comprend les étapes suivantes :

a) mesure en continu par un premier capteur de niveau de cotes piézométriques sur le point de prélèvement, ledit capteur disposant d'un premier historique de données disponible sur une durée prédéterminée révolue ;
b) mesure en continu par un deuxième capteur de niveau de cotes piézométriques sur le piézomètre de référence, ledit deuxième capteur disposant d'un deuxième historique de données disponible sur la durée prédéterminée révolue ;

ledit procédé comprenant en outre les étapes suivantes mises en œuvre par une machine de calcul :

c) traitement des données du premier capteur de niveau pour créer une chronique de cotes piézométriques pseudo-statiques et une chronique de cotes piézométriques dynamiques sur la durée prédéterminée révolue ;
d) détermination d'une chronique de rabattements au point de prélèvement sur ladite durée prédéterminée révolue, un rabattement étant défini comme étant la différence, à un instant donné, entre la cote piézométrique pseudo-statique et la cote piézométrique dynamique ;
e) détermination de valeurs de transmissivité apparentes au point de prélèvement, permettant de reproduire au mieux la chronique de rabattements déterminés sur ladite durée prédéterminée révolue, en utilisant la relation analytique de Cooper-Jacob afin d'associer une valeur de transmissivité apparente à différentes classes de cotes piézométriques pseudo-statiques, l'association constituant une première relation ;
f) détermination d'un niveau critique d'exploitation audit point de prélèvement ;
g) sélection d'un piézomètre de référence disposant de mesures de cotes piézométriques sur ladite durée prédéterminée révolue ;
h) calcul de moyennes temporelles desdites cotes piézométriques pseudo-statiques et des cotes piézométriques mesurées sur le piézomètre de référence sur ladite durée prédéterminée révolue ;
i) détermination d'une deuxième relation entre lesdites moyennes temporelles desdites cotes piézométriques pseudo-statiques et les moyennes temporelles desdites cotes piézométriques mesurées sur le piézomètre de référence sur ladite durée prédéterminée révolue ;
j) détermination d'un rabattement maximum admissible pour chaque valeur de cote piézométrique pseudo-statique, un rabattement maximum admissible étant défini comme étant la différence entre une cote piézométrique pseudo-statique et ledit niveau critique d'exploitation ;
k) détermination du volume prélevable maximum admissible de ladite source d'eau souterraine prélevé audit point de prélèvement en utilisant la relation de Cooper-Jacob et lesdites première et deuxième relations.

La ressource en eau peut être une ressource en eau brute souterraine, comme des sources, des nappes, des karsts, exploitée par un ou plusieurs captages. De préférence, la ressource en eau est une nappe dont le volume d'eau prélevable est déterminé par le niveau piézométrique. Il est à noter que cette ressource en eau peut être reliée à une ou plusieurs entités de production d'eau telles que des usines de traitement.

Au sens de la présente invention, on entend par niveau critique d'exploitation, le niveau en dessous duquel le captage d'eau altère la bonne régénérescence en eau de la ressource et/ou altère le matériel de captage.

Avantageusement, les moyennes temporelles sont des moyennes mensuelles.

L'invention a également pour objet un programme informatique comprenant des instructions adaptées à la mise en œuvre de chacune des étapes du procédé ci-avant décrit lorsque ledit programme est exécuté sur une machine de calcul.

L'invention a encore pour objet un système comprenant des moyens adaptés à la mise en œuvre de chacune des étapes du procédé décrit ci-avant.

L'invention sera mieux comprise à la lecture de la description qui suit, faite uniquement à titre d'exemple et fournie à titre indicatif et nullement limitatif.

**Description détaillée**

Selon un mode de réalisation de l'invention, un procédé de détermination temporelle d'un volume d'eau prélevable maximum admissible est appliqué à une nappe. Le volume d'eau est alors prélevé en un point de prélèvement qui peut par exemple être équipé d'un dispositif de captage quelconque utilisé et connu de l'état de l'art. L'état hydrogéologique de la nappe est alors qualifié par des mesures de cotes piézométriques sur un piézomètre de référence.

La ressource en eau étant une nappe, le volume d'eau prélevable qu'elle contient est alors déterminé par niveau piézométrique. Dans cette configuration, le procédé de détermination par le niveau piézométrique permet de prendre indirectement en compte la situation hydrogéologique de la nappe, et les phénomènes naturels et anthropiques ayant un effet sur l'état quantitatif de l'aquifère. Cette méthode est simple, robuste et applicable à des aquifères continus c'est-à-dire non karstiques et non fracturés, et pour de multiples configurations de dispositifs de captage comme les forages, les puits à drains, et les champs captants, par exemple, à l'exception des captages de sources.

Il est à noter que la gestion quantitative des eaux contenues dans la nappe et la définition de volumes prélevables au sein de cette nappe nécessite de définir au préalable des limites spatiales de l'ensemble considéré. Ces limites sont définies en fonction des caractéristiques géologiques et hydrogéologiques locales.

Par exemple, on dispose généralement de données géologiques et hydrogéologiques de la piézométrie régionale, de la transmissivité ou encore du coefficient d'emmagasinement, et de données d'exploitation (par exemple des mesures de niveau d'eau et une cote du repère utilisé, des volumes prélevés, des débits nominaux d'une ou plusieurs des pompes).

La définition de volumes prélevables de la nappe nécessite également de disposer d'une bonne connaissance de son état hydrogéologique, d'un bilan hydraulique précis de toutes les entrées et sorties d'eau du système (naturelles ou anthropiques), et d'évaluer sa capacité de stockage intrinsèque.

Par exemple, on dispose comme caractéristiques générales du captage d'exploitation, des coupes géologiques qui sont des représentations schématiques de la succession des formations géologiques sur un profil vertical, avec indication des cotes associées, ou encore des coupes techniques qui sont des représentations schématiques des caractéristiques et des cotes des équipements d'un ouvrage souterrain, par exemple, sur un profil vertical. On peut citer par exemple, des trous nus, les caractéristiques du pré-tubage et du tubage, massif filtrant, cimentation, protection en tête.

La gestion quantitative d'une nappe nécessite donc une connaissance de son état, de sa recharge, des prélèvements et des besoins.

D'autres données d'exploitation comme le nombre d'heures journalières de pompage et le débit instantané moyen journalier peuvent facultativement être également prises en compte.

Le procédé selon l'invention comprend une étape a) consistant à mesurer en continu, par un premier capteur de niveau les cotes piézométriques sur le point de prélèvement, ledit capteur disposant d'un premier historique de données disponibles sur une durée prédéterminée révolue. Il est nécessaire de disposer de valeurs de cotes piézométriques de la nappe s'étendant sur une durée prédéterminée, qui peut par exemple être d'au moins deux ans. Ce premier capteur peut fonctionner avec d'autres capteurs afin de permettre ultérieurement de mettre en avant des cotes pseudo-statiques, définissant l'état de la nappe sans l'influence du prélèvement au point de prélèvement, ainsi que des cotes dynamiques définissant l'état de la nappe en phase de pompage au point de prélèvement. Ces cotes sont des valeurs d'entrée nécessaires à la mise en œuvre du procédé selon l'invention.

Le procédé comprend également une étape b), réalisée après l'étape a), consistant à mesurer en continu par un deuxième capteur de niveau des cotes piézométriques sur le piézomètre de référence, ledit deuxième capteur disposant d'un deuxième historique de données disponible sur la durée prédéterminée révolue. Cette étape permettra de sélectionner ultérieurement le piézomètre de référence adéquat associé à la nappe dans laquelle le volume d'eau est prélevé. En d'autres termes, cette étape permet de lier le comportement de la nappe au point de prélèvement avec le comportement de la nappe au piézomètre de référence. Cette liaison est possible, comme on le verra dans la suite de cette description, en comparant les moyennes temporelles des cotes piézométriques pseudo-statiques au point de prélèvement et les moyennes temporelles des cotes piézométriques au piézomètre de référence sur la même durée prédéterminée révolue.

Après l'étape b), le procédé comprend une étape c) mise en œuvre par une machine de calcul et consistant à traiter des données du premier capteur de niveau pour créer une chronique de cotes piézométriques pseudo-statiques et une chronique de cotes piézométriques dynamiques sur la durée prédéterminée révolue.

Pour ce faire, des données d'exploitation journalières sur le captage peuvent être récupérées sur une période d'au moins deux ans. Ces données d'exploitation peuvent, par exemple, renseigner sur :

- la cote pseudo-statique (valeur de profondeur journalière maximum, en m) de la nappe étudiée ;
- la cote dynamique (valeur de cote journalière minimum, en m) ;
- la durée journalière de pompage (en h) ;
- le débit instantané moyen journalier (en $m^3/h$) ;
- le volume prélevé journalier (en $m^3/j$).

Ensuite, une étape d) est réalisée et consiste à déterminer une chronique de rabattements au point de prélèvement sur ladite durée prédéterminée révolue, un rabattement étant défini comme étant la différence, à un instant donné, entre une ladite cote piézométrique pseudo-statique et ladite cote piézométrique dynamique.

Après l'étape d), une étape e) est appliquée et consiste à déterminer des valeurs de transmissivité apparentes au point de prélèvement, permettant de reproduire au mieux la chronique de rabattements sur ladite durée prédéterminée révolue, en utilisant la relation analytique de Cooper-Jacob afin d'associer une valeur de transmissivité apparente à différentes classes de cotes piézométriques pseudo-statiques, l'association constituant une première relation.

Cette première relation peut être déterminée par la relation analytique de Cooper-Jacob suivante:

$$s(r,t) = \frac{2.303Q}{4\pi T} \log\left(\frac{2.25Tt}{r^2 S}\right).$$

Celle-ci est couramment utilisée en hydrogéologie quantitative. Elle permet notamment de fournir une estimation du volume maximum d'eau souterraine prélevable en fonction du rabattement, lui-même dépendant du niveau piézométrique statique de la nappe.

En particulier, cette relation de Cooper-Jacob est utilisée afin de calculer un rabattement théorique s(r,t), en fixant les paramètres nécessaire à l'application de cette relation, c'est-à-dire la transmissivité (T), le coefficient d'emmagasinement (S), la distance radiale au point de prélèvement (r), la durée du prélèvement journalier (t), et le débit instantané moyen journalier (Q).

On peut donc ensuite représenter des couples de points rabattement / cote piézométriques journalières pseudo-statique sur un graphique pour des valeurs proches de débit journalier moyen. Le graphique permet de segmenter visuellement les valeurs de rabattement observées selon plusieurs classes de cotes piézométriques journalières pseudo-statiques. Pour chaque classe, les valeurs de transmissivité apparente peuvent être ajustées afin que la valeur de l'indicateur d'écart (communément désigné par RMSE) entre rabattement observé et rabattement simulé avec la relation de Cooper-Jacob soit minimum.

Dans une étape f) suivante, on détermine un niveau critique d'exploitation audit point de prélèvement. Il est à noter que le niveau critique d'exploitation d'un captage tel qu'un puits ou un forage peut être conditionné par :

- la cote altimétrique supérieure de la partie crépinée du tubage ;
- la cote d'exploitation locale limite de la nappe, qui peut être :

  ◦ une cote de maintien de captivité de la nappe,
  ◦ une cote de non-invasion de biseau salé,
  ◦ une cote de non-dénoyage d'une zone productive,
  ◦ une cote réglementaire (piézométrie objectif, seuil d'alerte...),

- la cote de la crépine d'aspiration de la pompe ou la cote de sécurité déclenchant l'arrêt de la pompe.

La cote piézométrique la plus élevée, donc la plus défavorable, puisqu'elle minimisera le rabattement maximum admissible et donc le volume prélevable, sera retenue comme niveau critique d'exploitation de l'ouvrage, notée $z_{NC}$. La détermination du niveau critique nécessite donc de disposer de la coupe technique et de la coupe géologique de l'ouvrage, et de l'existence éventuelle de cotes réglementaires de gestion de la nappe. Il est à noter que dans le cas d'un champ captant, le niveau critique le plus défavorable sera retenu et appliqué à un captage conceptuel qui représentera le champ captant par un unique point de prélèvement. Il est à noter que le niveau critique d'exploitation peut être fixé antérieurement et représenter un seuil d'alerte.

Ensuite, on procède à une étape g) de sélection du piézomètre de référence. Il est à noter que la sélection du piézomètre de référence, qui est généralement un piézomètre régional de référence, nécessite de lister l'ensemble des piézomètres captant la masse d'eau souterraine de la nappe étudiée. Ces piézomètres peuvent être identifiés facilement en consultant des bases de données, et en effectuant une recherche des stations de suivi du niveau d'eau par masse d'eau. Parmi ces piézomètres, seuls ceux qui sont en activité et qui disposent d'un historique suffisant sur une durée prédéterminée révolue (idéalement supérieur à 10 ans) seront considérés. Cet historique est connu suite aux mesures acquises par le deuxième capteur.

Ensuite, dans une étape h), on calcule des moyennes temporelles desdites cotes piézométriques pseudo-statiques et des cotes piézométriques mesurées sur les piézomètres de référence listés sur ladite durée prédéterminée révolue.

De préférence, les moyennes temporelles peuvent être des moyennes mensuelles. Le piézomètre de référence est retenu de la manière suivante : minimisation de la RMSE entre moyenne mensuelle de la cote piézométrique pseudo-statique au captage et la translation de la moyenne mensuelle de la cote piézométrique statique mesurée au piézomètre sur la durée d'observation commune.

Cette translation (notée $h_{s_{pt}}$) est obtenue en ajoutant à chaque valeur de la chronique mensuelle statique ($h_{s_p}$) du piézomètre l'écart relatif entre la moyenne des cotes mensuelles pseudo-statiques au captage ($\overline{h_{s_c}}$) et la moyenne des cotes mensuelles statiques au piézomètre ($\overline{h_{s_p}}$) comme indiqué ci-après :

$$h_{s_{pt}}(t) = h_{s_p}(t) + \left( \overline{h_{s_c}} - \overline{h_{s_p}} \right)$$

Dans le cas de plusieurs piézomètres avec une RMSE proche, celui qui dispose de l'historique le plus long sera idéalement retenu.

Ensuite, dans une autre étape i), on détermine une deuxième relation entre lesdites moyennes temporelles desdites cotes piézométriques pseudo-statiques et lesdites cotes piézométriques mesurées sur le piézomètre de référence sur ladite durée prédéterminée révolue. Cette étape permet ensuite, dans le cas de scénarios prospectifs sur l'état hydrogéologique de la nappe, de déterminer une moyenne temporelle de la cote piézométrique pseudo-statique au captage à partir d'une moyenne temporelle de la cote piézométrique au piézomètre de référence en utilisant ladite deuxième relation.

La deuxième relation, le plus souvent linéaire, ou constituée de plusieurs segments linéaires, sera retenue et permettra d'exprimer la cote piézométrique pseudo-statique mensuelle moyenne théorique au captage en fonction de la cote piézométrique mensuelle moyenne au piézomètre de référence. Cette relation empirique pourra être obtenue en utilisant une ou plusieurs régressions linéaires sur un graphique de type scatter-plot, ou d'autres fonctions de corrélation.

Après cela, une étape j) est réalisée et consiste à déterminer le rabattement maximum admissible pour chaque valeur de cote piézométrique pseudo-statique, un rabattement maximum admissible étant défini comme étant la différence entre une cote piézométrique pseudo-statique et ledit niveau critique d'exploitation. Il est à noter que le rabattement maximum admissible est considéré comme étant la différence entre la cote piézométrique pseudo-statique et le niveau critique d'exploitation, c'est-à-dire le seuil d'alerte. Un rabattement maximum admissible plus élevé autorisera un volume prélevable plus grand. Le rabattement maximum admissible, $s_{max}$, variable au cours du temps t, est défini comme la différence entre le niveau piézométrique pseudo-statique $h_{ps}$ et le niveau critique d'exploitation, noté $z_{NC}$.

$$s_{max}(t) = h_{ps}(t) - z_{nc}$$

Le rabattement maximum admissible tient compte indirectement des prélèvements et des phénomènes de recharge et décharge naturels de la nappe. Ces derniers influencent le niveau pseudo-statique.

Puis finalement, une étape k) est réalisée et consiste à déterminer le volume prélevable maximum admissible de ladite source d'eau souterraine audit point de prélèvement en utilisant la relation de Cooper-Jacob et lesdites première et deuxième relations.

Le volume maximum prélevable $V_{max}$ est calculé, à chaque pas de temps de la simulation, à l'aide de la relation de Cooper-Jacob (1946) et de la relation T = f($h_{ps}$) obtenue lors de la précédente étape. Il dépend du rabattement maximum admissible $s_{max}$ :

$$V_{max} = Q_{max} \cdot t_{exp} = \frac{4\pi T(h_{ps})s_{max}}{2,303} \frac{t_{exp}}{\log\left(\frac{2.25T(h_{ps})t_{exp}}{r^2 S}\right)}$$

$t_{exp}$ étant la durée maximum d'exploitation.

Dans le calcul du volume maximum prélevable, la valeur de $t_{exp}$ est fixée par défaut à 20 heures/jour. Dans le cas d'un champ captant, le volume maximum prélevable sera le volume prélevable par l'ensemble des captages qu'il contient.

Ainsi, ce procédé prend en compte indirectement la situation hydrogéologique, les effets de recharge/décharge de la nappe et les phénomènes naturels, qui influencent les cotes pseudo-statiques mesurées au captage. Elle prend également en compte indirectement les effets des prélèvements globaux sur la nappe et les activités anthropiques, qui influencent les cotes pseudo-statiques mesurées au captage.

Ainsi, selon cette méthode préférentielle selon l'invention, il est possible de réaliser des prévisions de disponibilité future de la ressource en eau, en particulier de la nappe, basées sur :

- les tendances hydriques connues au jour le jour,
- l'intégration comme variable du changement climatique dans les scénarios à moyen et long terme.

Le suivi quantitatif des eaux souterraines est surveillé, selon le mode préférentiel de l'invention, en surveillant les variations de niveau piézométrique des nappes. Toutefois ce suivi quantitatif peut également être surveillé en mesurant le débit des émergences (sources) selon la nature du captage.

Il est à noter que ce procédé permet de calculer un volume maximum prélevable théorique sur la base d'une cote piézométrique pseudo-statique et d'un niveau critique d'exploitation sur un captage. Ce volume maximum prélevable théorique n'est pas nécessairement atteignable en conditions d'exploitation.

## Programme informatique

Il est à noter qu'un programme d'ordinateur comprenant des instructions adaptées à la mise en œuvre de chacune des étapes du procédé ci-dessus décrites peut être élaboré. Ainsi, une machine de calcul est apte à exécuter ce programme d'ordinateur afin de gagner en efficacité et en rapidité.

## Système

Par ailleurs, un système comprenant des moyens adaptés à la mise en œuvre de chacune des étapes précitées peut être réalisé.

L'invention a été illustrée et décrite en détail dans la description précédente. Celle-ci doit être considérée comme illustrative et donnée à titre d'exemple et non comme limitant l'invention à cette seule description. De nombreuses variantes de réalisation sont possibles.

Dans les revendications, le mot « comprenant » n'exclut pas d'autres éléments et l'article indéfini « un/une » n'exclut pas une pluralité.

## Revendications

1. Procédé de détermination temporelle d'un volume d'eau prélevable maximum admissible d'une source d'eau souterraine, ledit volume d'eau étant prélevé en un point de prélèvement et l'état hydrogéologique de la source d'eau souterraine étant qualifié par des mesures de cotes piézométriques sur un piézomètre de référence,
ledit procédé étant **caractérisé en ce qu'**il comprend les étapes suivantes :

a) mesure en continu par un premier capteur de niveau de cotes piézométriques sur le point de prélèvement, ledit capteur disposant d'un premier historique de données disponible sur une durée prédéterminée révolue ;
b) mesure en continu par un deuxième capteur de niveau de cotes piézométriques sur le piézomètre de référence, ledit deuxième capteur disposant d'un deuxième historique de données disponible sur la durée prédéterminée révolue ;

ledit procédé comprenant en outre les étapes suivantes mises en œuvre par une machine de calcul :

c) traitement des données du premier capteur de niveau pour créer une chronique de cotes piézométriques pseudo-statiques et une chronique de cotes piézométriques dynamiques sur la durée prédéterminée révolue ;

d) détermination d'une chronique de rabattements au point de prélèvement sur ladite durée prédéterminée révolue, un rabattement étant défini comme étant la différence, à un instant donné, entre la cote piézométrique pseudo-statique et la cote piézométrique dynamique ;

e) détermination de valeurs de transmissivité apparentes au point de prélèvement, permettant de reproduire au mieux la chronique de rabattements déterminés sur ladite durée prédéterminée révolue, en utilisant la relation analytique de Cooper-Jacob afin d'associer une valeur de transmissivité apparente à différentes classes desdites cotes piézométriques pseudo-statiques, l'association constituant une première relation ;

f) détermination d'un niveau critique d'exploitation audit point de prélèvement ;

g) sélection d'un piézomètre de référence disposant de mesures de cotes piézométriques sur ladite durée prédéterminée révolue ;

h) calcul de moyennes temporelles desdites cotes piézométriques pseudo-statiques et des cotes piézométriques mesurées sur le piézomètre de référence sur ladite durée prédéterminée révolue ;

i) détermination d'une deuxième relation entre lesdites moyennes temporelles desdites cotes piézométriques pseudo-statiques et les moyennes temporelles desdites cotes piézométriques mesurées sur le piézomètre de référence sur ladite durée prédéterminée révolue ;

j) détermination d'un rabattement maximum admissible pour chaque valeur de cote piézométrique pseudo-statique, un rabattement maximum admissible étant défini comme étant la différence entre une cote piézométrique pseudo-statique et ledit niveau critique d'exploitation ;

k) détermination du volume prélevable maximum admissible de ladite source d'eau souterraine prélevé audit point de prélèvement en utilisant la relation de Cooper-Jacob et lesdites première et deuxième relations.

2. Procédé selon la revendication 1, selon lequel lesdites moyennes temporelles sont des moyennes mensuelles.

3. Programme informatique comprenant des instructions adaptées à la mise en œuvre de chacune des étapes du procédé selon les revendications 1 ou 2 lorsque ledit programme est exécuté sur une machine de calcul.

4. Système comprenant des moyens adaptés à la mise en œuvre de chacune des étapes du procédé selon les revendications 1 ou 2.

## Patentansprüche

1. Verfahren zur zeitlichen Bestimmung eines maximal zulässigen Wasservolumens, das aus einer unterirdischen Wasserquelle entnommen werden kann, wobei das Wasservolumen an einem Entnahmepunkt entnommen wird und der hydrogeologische Zustand der unterirdischen Wasserquelle durch Messungen von Piezometerhöhen an einem Referenzpiezometer qualifiziert wird,
wobei das Verfahren **dadurch gekennzeichnet ist, dass** es die folgenden Schritte umfasst:

a) kontinuierliches Messen von Piezometerhöhen am Entnahmepunkt durch einen ersten Niveausensor, wobei der Sensor über eine erste Datenhistorie verfügt, die über einen vorbestimmten vergangenen Zeitraum verfügbar ist;

b) kontinuierliches Messen von Piezometerhöhen am Referenzpiezometer durch einen zweiten Niveausensor, wobei der zweite Sensor über eine zweite Datenhistorie verfügt, die über den vorbestimmten vergangenen Zeitraum verfügbar ist;

wobei das Verfahren weiter die folgenden Schritte umfasst, die von einer Rechenmaschine implementiert werden:

c) Verarbeiten der Daten des ersten Niveausensors, um eine Chronik von pseudostatischen Piezometerhöhen und eine Chronik von dynamischen Piezometerhöhen über den vorbestimmten vergangenen Zeitraum zu erzeugen;

d) Bestimmen einer Chronik von Absenkungen am Entnahmepunkt über den vorbestimmten vergangenen Zeitraum, wobei eine Absenkung als die Differenz zwischen der pseudostatischen Piezometerhöhe und der dynamischen Piezometerhöhe zu einem gegebenen Zeitpunkt definiert ist;

e) Bestimmen von scheinbaren Durchlässigkeitswerten am Entnahmepunkt, die es ermöglichen, die Chronik von Absenkungen, die über den vorbestimmten vergangenen Zeitraum bestimmt wurden, bestmöglich zu reproduzieren, unter Verwendung der analytischen Beziehung nach Cooper-Jacob, um unterschiedlichen Klassen der pseudostatischen Piezometerhöhen einen scheinbaren Durchlässigkeitswert zuzuordnen, wobei die Zuordnung eine erste Beziehung darstellt;

f) Bestimmen eines kritischen Ausbeutungsniveaus am Entnahmepunkt;

g) Auswählen eines Referenzpiezometers, das über Messungen von Piezometerhöhen über den vorbestimmten vergangenen Zeitraum verfügt;

h) Berechnen von zeitlichen Mitteln der pseudostatischen Piezometerhöhen und der Piezometerhöhen, die am Referenzpiezometer gemessen wurden, über den vorbestimmten vergangenen Zeitraum;

i) Bestimmen einer zweiten Beziehung zwischen den zeitlichen Mitteln der pseudostatischen Piezometerhöhen und den zeitlichen Mitteln der Piezometerhöhen, die am Referenzpiezometer gemessen wurden, über den vorbestimmten vergangenen Zeitraum;

j) Bestimmen einer maximal zulässigen Absenkung für jeden pseudostatischen Piezometerhöhenwert, wobei eine maximal zulässige Absenkung als die Differenz zwischen einer pseudostatischen Piezometerhöhe und dem kritischen Ausbeutungsniveau definiert ist;

k) Bestimmen des maximal zulässigen entnehmbaren Volumens der unterirdischen Wasserquelle, das am Entnahmepunkt entnommen wird, unter Verwendung der Beziehung nach Cooper-Jacob und der ersten und zweiten Beziehung.

2. Verfahren nach Anspruch 1, wobei die zeitlichen Mittel Monatsmittel sind.

3. IT-Programm, das Anweisungen umfasst, die für die Implementierung jedes der Schritte des Verfahrens nach den Ansprüchen 1 oder 2 geeignet sind, wenn das Programm auf einer Rechenmaschine ausgeführt wird.

4. System, das Mittel umfasst, die für die Implementierung jedes der Schritte des Verfahrens nach den Ansprüchen 1 oder 2 geeignet sind.

**Claims**

1. A method for temporally determining a maximum allowable water volume that can be withdrawn from a groundwater source, said water volume being withdrawn at a withdrawal point and the hydrogeological state of the groundwater source being qualified by piezometric height measurements on a reference piezometer,

said method being **characterised in that** it comprises the following steps:

a) continuously measuring, by a first level sensor, piezometric heights on the withdrawal point, said sensor having a first available data history over a predetermined past period;

b) continuously measuring, by a second level sensor, piezometric heights on the reference piezometer, said second sensor having a second available data history over the predetermined past period;

said method further comprising the following steps implemented by a computing machine:

c) processing the data from the first level sensor to create a chronicle of pseudo-static piezometric heights and a chronicle of dynamic piezometric heights over the predetermined past period;

d) determining a drawdown chronicle at the withdrawal point over said predetermined past period, a drawdown being defined as the difference, at a given instant, between the pseudo-static piezometric height and the dynamic piezometric height;

e) determining apparent transmissivity values at the withdrawal point, allowing to better reproduce the chronicle of drawdowns determined over said predetermined past period, using the Cooper-Jacob analytical relationship in order to associate an apparent transmissivity value with different classes of said pseudo-static piezometric heights, the association constituting a first relationship;

f) determining a critical operating level at said withdrawal point;

g) selecting a reference piezometer having piezometric height measurements over said predetermined past period;

h) computing temporal averages of said pseudo-static piezometric heights and piezometric heights measured on the reference piezometer over said predetermined past period;

i) determining a second relationship between said temporal averages of said pseudo-static piezometric heights and the temporal averages of said piezometric heights measured on the reference piezometer over said predetermined past period;

j) determining a maximum allowable drawdown for each pseudo-static piezometric height value, a maximum allowable drawdown being defined as the difference between a pseudo-static piezometric height and said critical operating level;

k) determining the maximum allowable volume that can be withdrawn from said groundwater source withdrawn at said withdrawal point using the Cooper-Jacob relationship and said first and second relationships.

2. The method according to claim 1, whereby said temporal averages are monthly averages.

3. A computer programme comprising instructions suitable for the implementation of each of the steps of the method according to claims 1 or 2 when said programme is executed on a computing machine.

4. A system comprising means suitable for the implementation of each of the steps of the method according to claims 1 or 2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010193183 A